# EUROPEAN PATENT SPECIFICATION

(11) **EP 3 026 247 B1**
(45) Date of publication and mention of the grant of the patent: **30.12.2020**
(21) Application number: 15194073.1
(22) Date of filing: 11.11.2015
(51) Int. Cl.: F02K 1/76, F02K 1/72

(54) **COMPOSITE FAN HOUSING ASSEMBLY OF A TURBOFAN ENGINE AND METHOD OF MANUFACTURE**
VERBUNDSTOFFVENTILATORGEHÄUSEANORDNUNG EINES TURBOFANTRIEBWERKS UND VERFAHREN ZUR HERSTELLUNG
ENSEMBLE DE CARTER DE SOUFFLANTE COMPOSITE D'UN TURBORÉACTEUR ET PROCÉDÉ DE FABRICATION

(30) Priority: 26.11.2014 US 201462084886 P
(43) Date of publication of application: 01.06.2016
(73) Proprietor: United Technologies Corporation, Farmington, CT 06032 (US)
(72) Inventor: LUSSIER, Darin S., Guildford, CT Connecticut 06437 (US)
(74) Representative: Dehns

(56) References cited:
- EP-A2- 2 112 362
- EP-A2- 2 202 153
- EP-A2- 2 447 157
- EP-A2- 2 959 131
- CA-A1- 2 889 366
- US-A- 4 998 409
- US-A1- 2011 085 897
- US-A1- 2013 277 454

## Description

### BACKGROUND

The present disclosure relates to a fan housing assembly of a turbofan engine and more particularly to a non-metallic composite fan housing assembly and method of manufacture.

Turbofan engines include a fan section having a plurality of circumferentially spaced fan blades surrounded by a fan housing assembly supported within a nacelle and generally designed to inhibit projectile travel. Fan housing assemblies are known to include a generally cylindrical housing made of a non-metallic composite material to minimize weight. The assemblies further include V-grooves for supporting and connecting to a thrust reverser located downstream of the fan section, and flanges projecting radially outward from the housing to secure and support various components. Unfortunately, the flanges and V-grooves are typically made of metallic materials for strength and wear thus adding weight to the fan section and complicating manufacturing with the additional parts. There exists a need to reduce weight of the fan section, and reduce manufacturing cost and complexity.

EP 2447157 discloses a fan case and mount ring snap fit assembly. EP 2959131 is prior art under Article 54 (3) EPC, and EP 2202153 discloses a monolithic structure for mounting aircraft engine.

### SUMMARY

A fan housing assembly according to one aspect of the present invention is claimed in claim 1.

Additionally to the foregoing embodiment, the groove structure includes a seal located between the aft and leading legs and proximate to the base portion.

In the alternative or additionally thereto, in the foregoing embodiment, the groove structure includes a wear liner generally exposed radially outward and attached to the aft leg, the leading leg and the base portion.

In the alternative or additionally thereto, in the foregoing embodiment, the wear liner is metallic.

In the alternative or additionally thereto, in the foregoing embodiment, the one-piece composite material is non-metallic.

In the alternative or additionally thereto, in the foregoing embodiment, the groove structure includes a seal located between the aft and leading leg and in contact with the liner at the base portion.

In the alternative or additionally thereto, in the foregoing embodiment, the groove structure includes a leading portion projecting forward from the leading leg that extends between the base portion and the leading portion, and wherein the wear liner is in-part attached to the leading portion and faces radially outward.

In the alternative or additionally thereto, in the foregoing embodiment, the groove structure includes a stop block projecting radially outward from the wear liner at the leading portion.

In the alternative or additionally thereto, in the foregoing embodiment, the stop block and the leading liner are made of a one-piece metallic material.

Additionally to the foregoing embodiment, the groove structure includes a wear liner generally exposed radially outward and attached to at least the leading leg.

In the alternative or additionally thereto, in the foregoing embodiment, the housing assembly includes a flange attached to and projecting radially outward from the fan housing and made of a composite material.

In the alternative or additionally thereto, in the foregoing embodiment, an adhesive bonds the flange to the fan housing.

In the alternative or additionally thereto, in the foregoing embodiment, an adhesive bonds the groove structure to the fan housing.

In the alternative or additionally thereto, in the foregoing embodiment, the groove structure is constructed and arranged to receive a V-blade.

A method of manufacturing a fan housing assembly for a turbofan engine according to an aspect of the invention is claimed in claim 12 .

In the alternative or additionally thereto, in the foregoing embodiments, the method includes the step of adhering a wear liner to the portion.

In the alternative or additionally thereto, in the foregoing embodiments, the method includes the step of forming a flange in unison with the fan housing and as one continuous composite material.

These features and elements as well as the operation thereof will become more apparent in-light of the following description and the accompanying drawings. It should be understood, however, the following description and figures are intended to be exemplary in nature and non-limiting.

### BRIEF DESCRIPTION OF THE DRAWINGS

Various features will become apparent to those skilled in the art from the following detailed description of the disclosed non-limiting embodiments. The drawings that accompany the detailed description can be briefly described as follows:
FIG. 1 is a perspective view of a turbofan engine according to one non-limiting embodiment of the present disclosure;
FIG. 2 is an exploded view of the turbofan engine;
FIG. 3 is a partial cross section of a fan section of the engine detailing a fan housing assembly not forming part of the claimed invention;
FIG. 4 is a partial cross section of a second embodiment of a fan housing assembly not forming part of the claimed invention;
FIG. 5 is a partial cross section of a third embodiment of a fan housing assembly according to the claimed invention; and
FIG. 6 is a partial cross section a fourth embodiment of a fan housing assembly according to the claimed invention.

### DETAILED DESCRIPTION

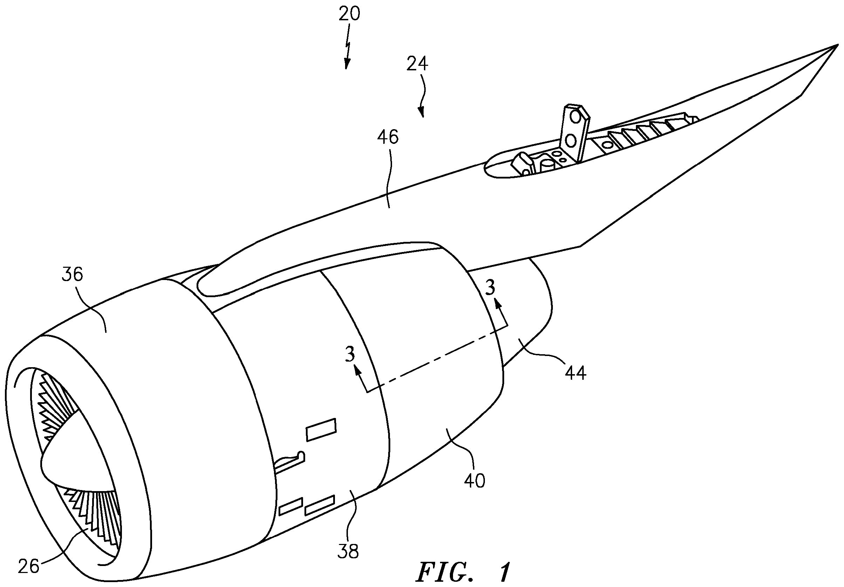

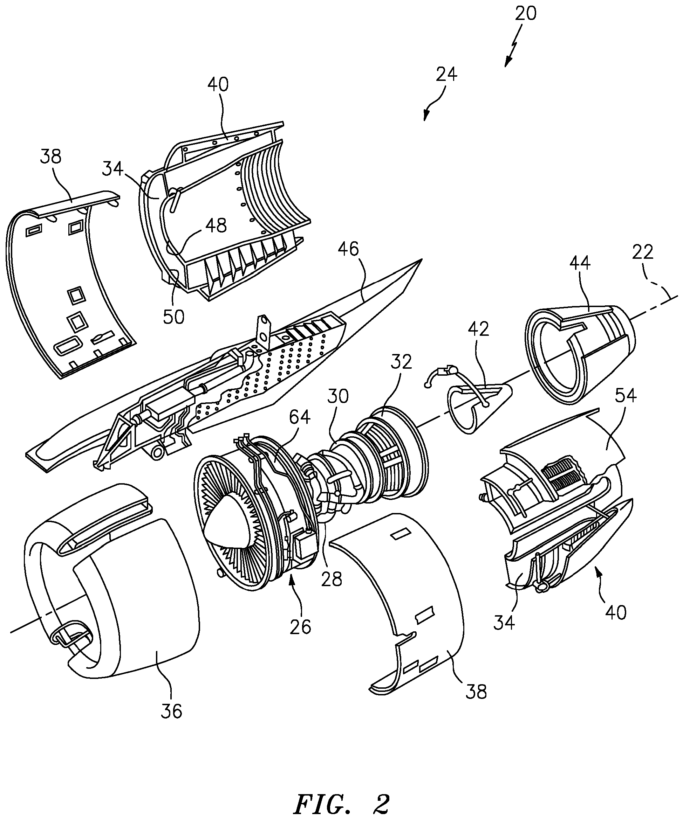

Referring to FIGS. 1 and 2, a turbofan engine 20 is centered about an engine axis 22 and includes a nacelle 24 that supports and generally surrounds an inner engine core that includes a fan section 26, a compressor section 28, a combustor section 30 and a turbine section 32. The fan section 26 drives air along a bypass flowpath or duct 34 and the combustor section 30 receives a portion of air from the fan section 26 and drives air along a core flowpath (not shown) for compression by the compressor section 28, then into the combustor section 30. The core air is mixed with fuel in the combustor section 30 and burned producing energy. The core air or exhaust from the combustor section 30 is expanded through the turbine section 32 and, in-turn, drives a central shaft (not shown) that powers the fan section 26.

The combusted core airflow flowing through the turbine generally powers the fan section 26 and the bypass airflow provides the majority of forward propulsion for the engine 20. More traditional turbofan engines may have a bypass airflow to core airflow ratio (i.e. bypass ratio) of about six (6:1). More recent high-bypass ratio engines, such as a geared turbofan engine may have greater bypass ratios that may exceed ten (10:1).

The nacelle 24 may include an intake cowl 36 disposed forward of the fan section 26, a fan cowl 38 that circumferentially surrounds and shields the fan section 26, a thrust reverser 40 that may circumferentially surround the compressor, combustor and turbine sections 28, 30, 32, an exhaust centerbody 42 aft of the turbine section 32, an exhaust nozzle 44 that is spaced radially outward from the exhaust centerbody 42, and a pylon 46 that supports the engine 20 typically to an undercarriage of an aircraft wing (not shown). The intake cowl 36, the fan section and cowl 26, 38, and the thrust reverser 40 are concentric to the engine axis 22.

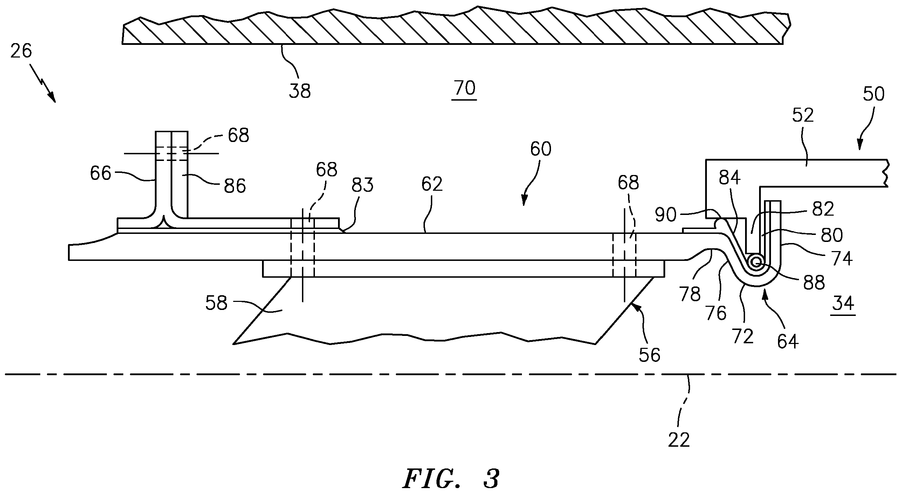

Referring to FIGS. 2 and 3, the thrust reverser 40 may have a plurality of circumferentially spaced blocker doors (not shown), a radially inner shell 48, and an outer shell 50 spaced radially outward from the inner shell 48 and defining at least in-part the bypass flowpath 34 therebetween. The outer shell 50 may have a stationary leading portion 52 fixed to the fan section 26, and an axially translating portion 54 (see FIG. 2) constructed and arranged to move in an axially downstream direction when the thrust reverser 40 moves from a stowed state to a deployed state. When in the stowed state, the blocker doors do not obstruct the bypass flowpath 34, and when in the deployed state the blocker doors are configured to obstruct flowpath 34 and divert airflow generally in a forward direction.

The fan section 26 includes a vane assembly 56 having a plurality of circumferentially spaced guide vanes 58, and a fan housing assembly 60 spaced radially inward from the fan cowl 38 of the nacelle 24. The vane assembly 56 is connected to and projects radially inward from the housing assembly 60 thereby, centering and connecting the housing assembly to the inner engine core. The fan housing assembly 60 may include a cylindrical fan housing 62 designed to contain any potential projectiles within the fan section, a ring-shaped groove structure 64 (i.e. V-groove), and at least one flange 66. The housing 62 may include a plurality of circumferentially and axially spaced holes 68 for receipt of fasteners or bolts that rigidly connect the vane assembly 56 to the radially inward side of the fan housing 62.

The groove structure 64 is rigidly connected, or formed, to an aft end portion of the housing 62 and generally receives and/or connects to the leading portion 52 of the outer shell 50 of the thrust reverser 40. The flange 66 connects to and projects radially outward from the fan housing 62 and may support various accessory components generally located in a cavity 70 defined radially between the fan housing 62 and the fan cowl 38. Examples of such components may include thrust reverser actuators and linkages (e.g. hold-open rods), tubing, electrical harnesses and others. Yet further, the flange 66 may be utilized to secure the fan cowl 38 to the fan section 26 (not shown). It is further contemplated and understood that the fan cowl 38 may be secured to the outer shell 50 of the thrust reverser 40.

The groove structure 64 includes an annular base portion 72, an annular aft leg 74, an annular leading leg 76, and an annular leading portion 78. The aft and leading legs 74, 76 project substantially radially outward from respective aft and leading ends of the base portion 72 and are spaced axially from one-another defining a groove 80 therebetween. The leading leg 76 generally spans between the base portion 72 and the leading portion 78, and the leading portion 78 projects axially upstream from the leg 76 to form or connect to an aft end portion of the fan housing 62. The leading portion 52 of the outer shell 50 includes a radially inward projecting rib 82 (i.e. V-blade) received in the groove 80 for attaching the thrust reverser 40 to the fan section 26, and capable of withstanding cyclic thrust reverser loads.

The fan housing 62, the flange 66, the base portion 72, the aft leg 74, the leading leg 76 and the leading portion 78 may be made of a non-metallic composite material comprised of a plurality of layers and directional fibers. In order to withstand inter-laminar loading, thickness ties or three dimensional weaves may be utilized as part of the composite material. As illustrated in FIG. 3, the housing 62, the base portion 72, the aft leg 74 and the leading leg 76 may be formed in unison during the manufacturing process thus producing one homogeneous and continuous piece. The flange 66 may be formed of a composite material, separately, and then adhered to a radially outward side of the housing 62 with an adhesive 83. More specifically and if the flange is circumferentially continuous, the flange 66 may first be manufactured as two circumferentially extending segments, then adhered to the fan housing 62 forming one continuous flange. One, non-limiting, example of an adhesive are epoxy-based. It is further contemplated and understood that any one portion or more of the groove structure may be made of a composite material and not necessarily all of the base structure.

The groove structure 64 may further include a wear resistant liner 84 that covers the composite sides of the base portion 72, aft leg 74 and leading leg 76 that oppose the rib 82 (i.e. generally - the radially outward facing surface). The liner 84 may be made of a titanium or an aluminum alloy depending upon the wear resistance requirements. It is further contemplated and understood that a galvanic barrier may be required if, for example, aluminum is used against the carbon. One example of a galvanic barrier may be fiberglass. Moreover, metallic liners are only required if wear is of a considerable concern; otherwise, a liner made of fiberglass may be sufficient. Anti-gallant coatings, such as dry film lubricants, may be used on liners made of titanium and aluminum alloys.

The flange 66 may be reinforced with a metallic backing 86 that is adhered or mechanically applied to the flange. The metallic backing 86 may include a radius that corresponds to a radius of the flange 66 near the housing 62. The backing radius provides for the positioning of the metallic backing further radially inward towards the housing. Moreover, the radius provides an increased area of compression contact providing an increase in compression strength. The backing 86 may be aluminum or an integral composite material if loads permit. The backing 86 may further reduce flange bending by driving the bolt circle towards the housing 62, thereby reducing the flange prying factor.

The groove structure 64 may further include a resilient and circumferentially continuous seal 88 in contact with the wear liner 84 proximate to the base portion 72, and a metallic wear or stop block 90. The seal 88 may be compressed between the liner 84 and a distal end of the rib 82 of the stationary leading portion 52 of the outer shell 50, when the engine is fully assembled, to prevent air leakage. The stop block 90 may be an integral part of the liner 84 and generally projects radially outward from the leading portion 78 of the groove structure 64 to contact and radially align the leading portion 52 of the outer shell 50. The stop block 90 further prevents over-compression of the seal 88 during cyclic loading by the thrust reverser 40 that could potentially damage the groove structure 64. It is further contemplated and understood that the stop block 90 may be a plurality of stop blocks spaced circumferentially from one-another or may be one circumferentially continuous stop block.

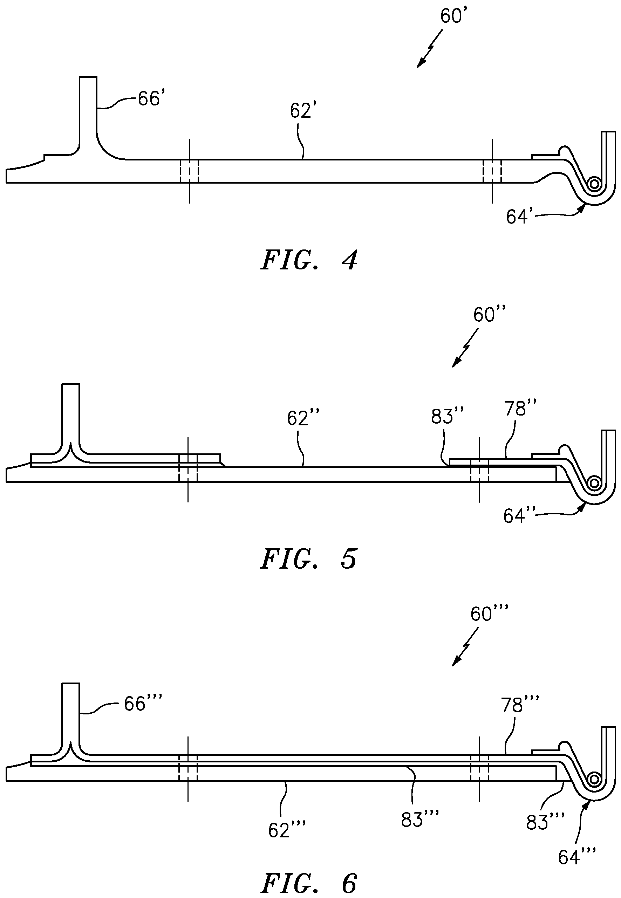

Referring to FIG. 4, a second embodiment of a fan housing assembly, not forming part of the claimed invention, is illustrated wherein like elements to the first embodiment have like identifying numerals except with the addition of a prime suffix. The fan housing assembly 60' of the second embodiment has a flange 66' that is integrally formed as one unitary piece to a fan housing 62'. That is, the flange 66', the housing 62' and the base components of a groove structure 64' are all manufactured and molded in unison and as one piece made of a non-metallic composite material.

Referring to FIG. 5, a third embodiment of a fan housing assembly according to the claimed invention is illustrated wherein like elements to the first embodiment have like identifying numerals except with the addition of a double prime suffix. The fan housing assembly 60" of the third embodiment has a groove structure 64" with a leading portion 78" that is adhered to an outer side of a fan housing 62" with an adhesive 83". The base components of the groove structure 64" may be initially molded as a non-metallic, composite, part separate from the housing 62".

Referring to FIG. 6, a fourth embodiment of a fan housing assembly according to the claimed invention is illustrated wherein like elements to the first embodiment have like identifying numerals except with the addition of a triple prime suffix. The fan housing assembly 60''' of the fourth embodiment has a flange 66''' that is directly attached to a leading portion 78''' of a groove structure 64'''. More specifically, the flange 66''' and the base components of the groove structure 64''' are manufactured in unison as one homogeneous and single part made of a non-metallic composite material. The flange 66''' and the groove structure 64''' are then secured to a non-metallic composite fan housing 62''' with an adhesive 83''',

While the invention is described with reference to exemplary embodiments, it will be understood by those skilled in the art that various changes may be made and equivalents may be substituted without departing from the scope of the invention. In addition, different modifications may be made to adapt the teachings of the invention to particular situations or materials, without departing from the essential scope thereof. The invention is thus not limited to the particular examples disclosed herein, but includes all embodiments falling within the scope of the appended claims.

## Claims

1. A fan housing assembly (60", 60''') of a turbofan engine comprising:
a fan housing (62", 62''') located about an engine axis (22) and defining a flowpath (34) radially inward; and
a groove structure (64", 64''') for securing a thrust reverser of the turbofan engine, wherein the groove structure comprises:
a base portion (72) concentrically located about an engine axis (22);
an aft leg (74) projecting radially outward from the base portion (72); and
a leading leg (76) projecting radially outward from the base portion (72) and spaced axially from the aft leg (74), and wherein the base portion (72), the aft leg (74) and the leading leg (76) are made of a one-piece composite material,
wherein the groove structure (64'', 64''') at least in-part located aft of and attached to the fan housing (62", 62'''), wherein the fan housing (64'', 62'''), the base portion (72) the aft leg (74) and the leading leg (76) are made of a composite material,
wherein an adhesive bonds the groove structure (64'', 64''') to the fan housing (62", 62''').

2. The fan housing assembly set forth in claim 1 further comprising:
a seal (88) located between the aft (74) and leading legs (76) and proximate to the base portion (72).

3. The fan housing assembly set forth in claim 1 or 2, wherein the one-piece composite material is non-metallic.

4. The fan housing assembly set forth in claim 1, 2 or 3, further comprising:
a wear liner (84) generally exposed radially outward and attached to the aft leg (74), the leading leg (76) and the base portion (72);
wherein the wear (84) liner is metallic.

5. The fan housing assembly set forth in claim 4 further comprising:
a or the seal (88) located between the aft (74) and leading leg (76) and in contact with the liner (84) at the base portion (72).

6. The fan housing assembly set forth in claim 4 or 5 further comprising:
a leading portion (78", 78''') projecting forward from the leading leg (76) that extends between the base portion (72) and the leading portion (78", 78'''), and wherein the wear liner (84) is in-part attached to the leading portion (78", 78''') and faces radially outward.

7. The fan housing assembly set forth in claim 6 further comprising:
a stop block (90) projecting radially outward from the wear liner (84) at the leading portion (78);
wherein the stop block (90) and the leading or wear liner (84) are made of a one-piece metallic material.

8. The fan housing assembly set forth in any preceding claim, wherein the groove structure (64", 64''') includes a wear liner (84) generally exposed radially outward and attached to at least the leading leg (76).

9. The fan housing assembly set forth in any preceding claim, wherein the groove structure (64", 64''') is constructed and arranged to receive a V-blade (82).

10. The fan housing assembly set forth in any preceding claim, further comprising:
a flange (66) attached to and projecting radially outward from the fan housing (62", 62''') and made of a composite material;
wherein an adhesive (64'', 83''') bonds the flange to the fan housing.

11. The fan housing assembly set forth in any preceding claim, wherein an adhesive bonds the groove structure (64", 64''') to the fan housing (62", 62''')

12. A method of manufacturing a fan housing assembly for a turbofan engine comprising the steps of:
forming a fan housing (64'', 62''') of a composite material;
forming at least a portion of a groove structure (64", 64''') of a non-metallic composite material; and
attaching the fan housing (64'', 62''') to the portion of the groove structure (64", 64'''), wherein the fan housing (62'', 62''') is attached to the portion with an adhesive.

## Patentansprüche

1. Verbundstoffgebläsegehäuseanordnung (60", 60''') eines Turbofantriebwerks, umfassend:
ein Gebläsegehäuse (62", 62'''), das um eine Triebwerkachse (22) angeordnet ist und einen radial nach innen gerichteten Strömungspfad (34) definiert; und
eine Nutstruktur (64",64''') zum Sichern einer Schubumkehrvorrichtung des Turbofantriebwerks, wobei die Nutstruktur Folgendes umfasst:
einen Basisabschnitt (72), der konzentrisch um eine Triebwerkachse (22) angeordnet ist;
einen hinteren Schenkel (74), der von dem Basisabschnitt (72) aus radial nach außen hervorsteht; und
einen vorderen Schenkel (76), der von dem Basisabschnitt (72) aus radial nach außen hervorsteht und axial von dem hinteren Schenkel (74) beabstandet ist, und wobei der Basisabschnitt (72), der hintere Schenkel (74) und der vordere Schenkel (76) aus einem einstückigen Verbundstoffmaterial gefertigt sind,
wobei die Nutstruktur (64", 64''') mindestens teilweise hinter dem Gebläsegehäuse (62", 62''') angeordnet und an diesem angebracht ist, wobei das Gebläsegehäuse (62", 62'''), der Basisabschnitt (72), der hintere Schenkel (74) und der vordere Schenkel (76) aus einem Verbundstoffmaterial gefertigt sind,
wobei ein Klebstoff die Nutstruktur (64", 64''') an das Gebläsegehäuse (62", 62''') bindet.

2. Gebläsegehäuseanordnung nach Anspruch 1, ferner umfassend:
eine Dichtung (88), die zwischen dem hinteren (74) und dem vorderen Schenkel (76) und in der Nähe des Basisabschnitts (72) angeordnet ist.

3. Gebläsegehäuseanordnung nach Anspruch 1 oder 2, wobei das einstückige Verbundstoffmaterial nichtmetallisch ist.

4. Gebläsegehäuseanordnung nach Anspruch 1, 2 oder 3, ferner umfassend:
eine Verschleißverkleidungsschicht (84), die im Allgemeinen radial nach außen freiliegt und an dem hinteren Schenkel (74), dem vorderen Schenkel (76) und dem Basisabschnitt (72) angebracht ist;
wobei die Verschleißverkleidungsschicht (84) metallisch ist.

5. Gebläsegehäuseanordnung nach Anspruch 4, ferner umfassend:
eine oder die Dichtung (88), die zwischen dem hinteren (74) und dem vorderen Schenkel (76) angeordnet ist und mit der Verkleidungsschicht (84) an dem Basisabschnitt (72) in Kontakt steht.

6. Gebläsegehäuseanordnung nach Anspruch 4 oder 5, ferner umfassend:
einen vorderen Abschnitt (78", 78'''), der von dem vorderen Schenkel (76) aus nach vorn hervorstehet, der sich zwischen dem Basisabschnitt (72) und dem vorderen Abschnitt (78", 78''') erstreckt,
und wobei die Verschleißverkleidungsschicht (84) teilweise an dem vorderen Abschnitt (78", 78''') angebracht und radial nach außen gewandt ist.

7. Gebläsegehäuseanordnung nach Anspruch 6, ferner umfassend:
einen Anschlagblock (90), der von der Verschleißverkleidungsschicht (84) an dem vorderen Abschnitt (78) aus radial nach außen hervorsteht;
wobei der Anschlagblock (90) und die vordere oder Verschleißverkleidungsschicht (84) aus einem einstückigen metallischen Material gefertigt sind.

8. Gebläsegehäuseanordnung nach einem der vorhergehenden Ansprüche, wobei die Nutstruktur (64", 64"') eine Verschleißverkleidungsschicht (84) beinhaltet, die im Allgemeinen radial nach außen freiliegt und mindestens an dem vorderen Schenkel (76) angebracht ist.

9. Gebläsegehäuseanordnung nach einem der vorhergehenden Ansprüche, wobei die Nutstruktur (64", 64"') zur Aufnahme eines V-Blattes (82) konstruiert und angeordnet ist.

10. Gebläsegehäuseanordnung nach einem der vorhergehenden Ansprüche, ferner umfassend:
einen Flansch (66), der an dem Gebläsegehäuse (62", 62''') angebracht ist und von diesem aus radial nach außen hervorsteht und aus einem Verbundstoffmaterial gefertigt ist;
wobei ein Klebstoff (83", 83''') den Flansch an das Gebläsegehäuse bindet.

11. Gebläsegehäuseanordnung nach einem der vorhergehenden Ansprüche, wobei ein Klebstoff die Nutstruktur (64", 64''') an das Gebläsegehäuse (62", 62''') bindet.

12. Verfahren zum Herstellen einer Gebläsegehäuseanordnung für ein Turbofantriebwerk, das die folgenden Schritte umfasst:
Ausbilden eines Gebläsegehäuses (62", 62''') aus einem Verbundstoffmaterial;
Ausbilden mindestens eines Abschnitts einer Nutstruktur (64", 64''') aus einem nichtmetallischen Verbundstoffmaterial; und
Anbringen des Gebläsegehäuses (62", 62''') an dem Abschnitt der Nutstruktur (64", 64'''),
wobei das Gebläsegehäuse (62", 62''') mit einem Klebstoff an den Abschnitt angebracht wird.

## Revendications

1. Ensemble de logement de ventilateur (60'', 60''') d'un turboréacteur comprenant :
un logement de ventilateur (62'', 62''') situé autour d'un axe de moteur (22) et définissant un trajet d'écoulement (34) radialement vers l'intérieur ; et
une structure de rainure (64'', 64''') pour fixer un inverseur de poussée du turboréacteur, dans lequel la structure de rainure comprend :
une partie de base (72) située de manière concentrique autour d'un axe de moteur (22) ;
une patte arrière (74) faisant saillie radialement vers l'extérieur depuis la partie de base (72) ; et
une patte avant (76) faisant saillie radialement vers l'extérieur depuis la partie de base (72) et espacée axialement de la patte arrière (74), et dans lequel la partie de base (72), la patte arrière (74) et la patte avant (76) sont constitués d'un matériau composite monobloc,
dans lequel la structure de rainure (64'', 64''') au moins en partie située à l'arrière du logement de ventilateur (62'', 62''') et fixée à celui-ci, dans lequel le logement de ventilateur (62'', 62'''), la partie de base (72), la patte arrière (74) et la patte avant (76) sont constitués d'un matériau composite,
dans lequel un adhésif lie la structure de rainure (64'', 64''') au logement de ventilateur (62", 62''').

2. Ensemble de logement de ventilateur selon la revendication 1, comprenant en outre :
un joint (88) situé entre les pattes arrière (74) et avant (76) et à proximité de la partie de base (72).

3. Ensemble de logement de ventilateur selon la revendication 1 ou 2, dans laquelle le matériau composite monobloc est non métallique.

4. Ensemble de logement de ventilateur selon la revendication 1, 2 ou 3, comprenant en outre :
une doublure d'usure (84) généralement exposée radialement vers l'extérieur et fixée à la patte arrière (74), à la patte avant (76) et à la partie de base (72) ;
dans lequel la doublure d'usure (84) est métallique.

5. Ensemble de logement de ventilateur selon la revendication 4, comprenant en outre :
un ou le joint (88) situé entre la patte arrière (74) et la patte avant (76) et en contact avec la doublure (84) au niveau de la partie de base (72).

6. Ensemble de logement de ventilateur selon la revendication 4 ou 5, comprenant en outre :
une partie avant (78'', 78''') faisant saillie vers l'avant depuis la patte avant (76) qui s'étend entre la partie de base (72) et la partie avant (78'', 78'''),
et dans lequel la doublure d'usure (84) est en partie fixée à la partie avant (78'', 78''') et fait face radialement vers l'extérieur.

7. Ensemble de logement de ventilateur selon la revendication 6, comprenant en outre :
un bloc d'arrêt (90) faisant saillie radialement vers l'extérieur de la doublure d'usure (84) au niveau de la partie avant (78) ;
dans lequel le bloc d'arrêt (90) et la doublure avant ou d'usure (84) sont constitués d'un matériau métallique monobloc.

8. Ensemble de logement de ventilateur selon une quelconque revendication précédente, dans lequel la structure de rainure (64'', 64''') comporte une doublure d'usure (84) généralement exposée radialement vers l'extérieur et fixée à au moins la patte avant (76).

9. Ensemble de logement de ventilateur selon une quelconque revendication précédente, dans lequel la structure de rainure (64'', 64''') est construite et agencée pour recevoir une pale en V (82).

10. Ensemble de logement de ventilateur selon une quelconque revendication précédente, comprenant en outre :
une bride (66) fixée et faisant saillie radialement vers l'extérieur du logement de ventilateur (62'', 62''') et constituée d'un matériau composite ;
dans lequel un adhésif (83'', 83''') lie la bride au logement de ventilateur.

11. Ensemble de logement de ventilateur selon une quelconque revendication précédente, dans lequel un adhésif lie la structure de rainure (64'', 64''') au logement de ventilateur (62", 62''').

12. Procédé de fabrication d'un ensemble de logement de ventilateur pour un turboréacteur comprenant les étapes :
de formation d'un logement de ventilateur (62", 62''') en un matériau composite ;
de formation d'au moins une partie d'une structure de rainure (64", 64''') d'un matériau composite non métallique ;
et
de fixation du logement de ventilateur (62", 62''') à la partie de la structure de rainure (64", 64'''),
dans lequel le logement de ventilateur (62", 62''') est fixé à la partie avec un adhésif.
